# EUROPEAN PATENT SPECIFICATION

(11) **EP 3 695 933 B1**
(45) Date of publication and mention of the grant of the patent: **08.12.2021**
(21) Application number: 19305195.0
(22) Date of filing: 18.02.2019
(51) Int. Cl.: B23P 6/00, B23P 15/00, B23K 20/12, B23K 20/227, B23K 20/233, B60B 3/02, B60B 17/00, B23K 101/26, B23K 103/04, B23K 103/18

(54) **METHOD FOR PROCESSING WHEELS OF RAILWAY VEHICLES**
VERFAHREN ZUR BEARBEITUNG VON RÄDERN VON SCHIENENFAHRZEUGEN
PROCÉDÉ DE TRAITEMENT DE ROUES DE VÉHICULES FERROVIAIRES

(43) Date of publication of application: 19.08.2020
(73) Proprietor: ALSTOM Transport Technologies, 93400 Saint-Ouen (FR)
(72) Inventor: JURDECZKA, Uwe, 38124 BRAUNSCHWEIG (DE); STROTHMANN, Martin, 38302 Wolfenbüttel (DE)
(74) Representative: Lavoix

(56) References cited:
- EP-A1- 3 147 070
- DE-C- 697 472
- US-A- 6 073 346
- US-A1- 2009 218 837
- US-A1- 2011 151 109
- US-A1- 2014 033 535
- US-A1- 2015 128 825
- US-A1- 2018 361 501
- US-B1- 6 746 064

## Description

The present invention relates in general to wheels for railway vehicles, and in particular it concerns an improved method for processing wheels of railway vehicles, wheels realized according to such method and having an extended lifetime, and to a railway vehicle comprising one or more of such wheels.

As well-known, wheels of railway vehicles, be them for example trains or trams, are mounted on an axle which defines the axis of rotation of the wheels.

The axle is attached to a bogie which in turns supports the car body of the railway vehicle in a manner that allows the vehicle to move along a railway line.

During the movement of the railway vehicle, the part of each wheel in contact with an associated rail undergoes wearing caused by friction.

As a consequence, the initial profile of the wheels can be altered, thus resulting in a reduction of the contact adhesion between the rail and the wheels itself, in particular at highly worn zones.

To cope with this issue, wheels of railway vehicles are provided with a purposive outer layer of wearable out or sacrificial material.

Such wearable layer is damaged during operations and, in order to eliminate, or at least reduce worn areas and restore a wheel profile as much as possible close to the most efficient one, there have been established maintenance re-profiling operations according to well defined and suitably planned schedules.

For instance, in case of a tram, these operations are performed when the vehicle has travelled a given distance which ranges between 10,000 km and 15,000 km.

In particular, during the scheduled maintenance operations, according to more traditional solutions, the wearable layer is machined, e.g. usually milled, by removing worn areas.

Although such operations bring some improvements to the used profile of the contact surface and usually allow re-obtaining even surfaces with a profile rather similar to the initial one, milling operations are possible only a few times during the service lifetime of a wheel, and in particular until when the layer of wearable material becomes too thin.

As a matter of fact, at a certain time, wheel discs have to be scrapped when their overall diameter is reduced below a minimum value and are replaced by new ones.

As a consequence, a lot of material might be scrapped unused or, if recycled, it would require a considerable amount of energy, thus jeopardizing at least in part the recovery of material cost.

In order to mitigate such issues, some alternative solutions aimed at restoring the profile of used wheels have been proposed over the years.

These solutions are substantially based on welding techniques or similar proceedings, such as for example Metal Active Gas (MAG) welding techniques, or Selective Laser Melting (SLM) techniques, plasma arc fusion techniques, et cetera.

Such techniques, even if bringing some better results on the outer surfaces of a railway wheel compared with more traditional solutions, have an intrinsic negative influence on the material of the basic discs of wheels, due especially to the generation of zones affected by heat with a tendency of embrittlement, thus resulting in the end in the necessity of additional and expensive heat treatments.

US 2009/218837 A1 discloses the preamble of claim 1, in particular a method for repairing rail wheels, wherein a worr wheel is first machined to provide a wheel body having a round cylindrical outer surface; then a ring member is applied over the body to form a repaired wheel assembly. In particular, the surface of the ring member is brought into close physical contact with the surface of the wheel body in a shrink fitting operation, for example using induction heating. The wheel assembly is heated to a predetermined temperature so that diffusion bonding occurs between the cylindrical outer surface and the surface of the ring member with the aid of pressure exerted thanks to the shrink fitting.

US 6,073,346 A discloses a railroad wheel, wherein a body of the wheel is first formed from a first alloy having superior resistance to fatigue, for example via casting or forging, and then a rim, made of a second alloy having superior resistance to wear, is applied over the body. In particular, an envelope is formed and secured to the wheel in order to form a cavity inside which the second alloy, in the form of a powder, is placed. Then, the wheel assembly is heated at high temperature and subject to high pressure in order to densify and diffuse weld the two alloys together.

DE 697472 C discloses a method for producing wheels having wear resistant thread, wherein a band of wear-resistant material is rolled into a groove provided in the circumference of the wheel. In particular, the band is first heated by a heating furnace, then is applied via a roller pressing it into the groove, and finally it is quenched by a cooling device; in this way, the band is forge-welded into the groove.

Therefore, it is quite evident the need of having railway wheels further improved in order to face such technical issues and to solve, at least partially, the above indicated drawbacks and operational inconvenient.

Hence, it is a main aim of the present invention to provide a solution for processing railway wheels which allows obtaining railway wheels substantially improved over actual ones, in particular as regard to the duration of their whole operative lifetime.

Within the scope of this aim, an object of the present invention is to provide a solution for processing railway wheels which can be applied substantially in the same way both for manufacturing new wheels and for refurbishing wheels already used.

Yet a further object of the present invention is to provide a solution for processing railway wheels which is highly reliable, easy to realize and at competitive costs.

This aim, these objects and others which will become apparent hereinafter are achieved by a method for processing wheels of railway vehicles, comprising the steps of:
(a): providing a wheel of a railway vehicle having at least a base disc comprising a first material;
(b): providing at least one coating material, said at least one coating layer being suitable to be positioned over at least part of an outer surface of said base disc and to form a wearable out contact surface for contacting a rail during operation of the railway vehicle; characterized in that it comprises at least the following step:
(c): realizing a metallurgical bond between said at least one coating layer and said at least part of the outer surface of the base disc via a solid-state welding phase using heat self-generated via friction when bonding the coating layer onto the outer surface of the base disc;

wherein said step (c) of realizing a metallurgical bond comprises metal bonding said at least one coating material to the base disc by means of friction stir build-up welding by pressing against said at least part of the outer surface (6) a stirring tool (30), said stirring tool (30) moving relative to the outer surface (6) along a bonding direction (B), and
wherein the stirring tool is made of coating material and a contact area of the stirring tool (30) with said at least part of the outer surface (6) is plasticized while moving along the bonding direction (B) and being pressed against said at least part of the outer surface (6), the plasticized contact area of the stirring tool (30) forming a coating layer (3) on said at least part of the outer surface (6).

According to other peculiar aspects and possible embodiments, the method for processing railway wheels according to the present invention comprises one or more of the following characteristics, taken individually, or in any possible combination:
- a further step (d) of removing from the provided wheel a pre-existing layer of worn material from around the base disc;
- a further intermediate step (e) of cleaning the outer surface of the base disc of the wheel, in particular at the surface devoted for the application of the coating layer, is carried out before the step (c) of realizing said metallurgical bond;
- the step (b) of providing at least one coating layer comprises providing at least one layer made of a second material different from the first material of the base disc.

Advantageously, the method according to present invention is suitable for manufacturing new wheels, as well as for maintaining already used ones.

Hence, another aspect of the present disclosure includes a wheel of a railway vehicle worked using a method according to the present invention, as described hereinafter and in particular as defined in the appended claims.

Further, the method according to the present invention can be used in principle for whatever type and dimensions of wheels usable in any type of railway vehicles, such as trains, trams, subway convoys, rail chariots, et cetera.

Further characteristics and advantages will become apparent from the description of some preferred, but not exclusive exemplary embodiments, of a method for processing wheels of railway vehicles according to the present disclosure, illustrated only by way of non-limitative examples with the accompanying drawings, wherein:
Figure 1 is a flow chart schematically illustrating a method for processing wheels of railway vehicles according to the present invention;
Figure 2 schematically shows a portion of a railway wheel realized using the method of figure 1;
Figure 3 is a sketch schematically illustrating a portion of a railway wheel undergoing a phase of metallurgically bonding a coating layer onto a base disc via a friction stir build-up welding.

It should be noted that in the detailed description that follows, identical or similar components, either from a structural and/or functional point of view, have the same reference numerals, regardless of whether they are shown in different embodiments of the present disclosure.

It should also be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to.

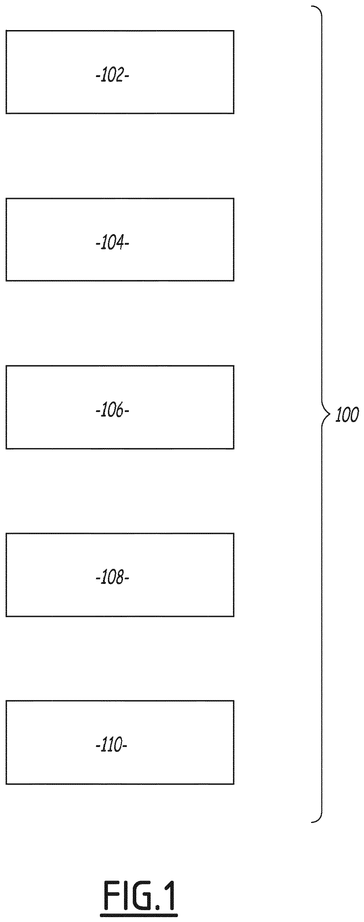

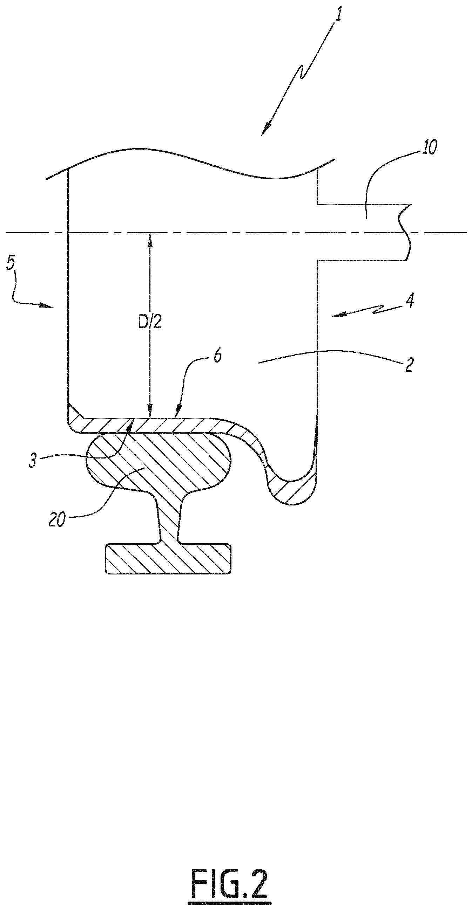

Figures 1 and 2 schematically illustrate a method 100 for processing wheels of railway vehicles, and a portion of wheel 1 worked using such method 100, respectively.

In particular, the method 100 comprises at least the following steps:
- 102: providing a wheel 1 of a railway vehicle having at least a base disc, indicated in figure 2 by the reference number 2, wherein the base disc 2 comprises a first material;
- 104: providing at least one coating material, forming for example a coating layer made of the coating material, wherein the at least one coating layer/material, indicated in figure 2 by the reference number 3, is suitable to be positioned over at least part of an outer surface 6 of said base disc 2 and to form a wearable out contact surface for contacting a rail, indicated in figure 2 by the reference number 20, during operation of the railway vehicle using such wheel;
- 110: realizing a metallurgical bond between the at least one coating layer/material 3 and said at least part of the outer surface of the base disc 2, wherein the metallurgical bond is realized via solid state welding with heat generated when bonding the coating layer/material onto the outer surface of the base disc, i.e. with heat self-generated when bonding the coating layer/material onto the outer surface of the base disc.

In the following of the description we use indistinctly the terms coating layer and coating material.

With the expression "solid state welding using self-generated heat", it is hereby meant a welding realized with the presence of only heat generated spontaneously when bonding the parts to be joined, namely via friction, and therefore without applying any heat purposively generated for example by a source, such as a laser, electrodes, et cetera.

Further, with the term "material", it is hereby meant either a single element or component, or a combination of two or more elements or components, e.g. an alloy.

In one embodiment of the method 100 according to the invention, the step 110 of realizing a metallurgical bond comprises bonding the at least one coating layer 3 onto a portion of the base disc 2 by applying a friction stir welding, notably a friction stir build-up welding.

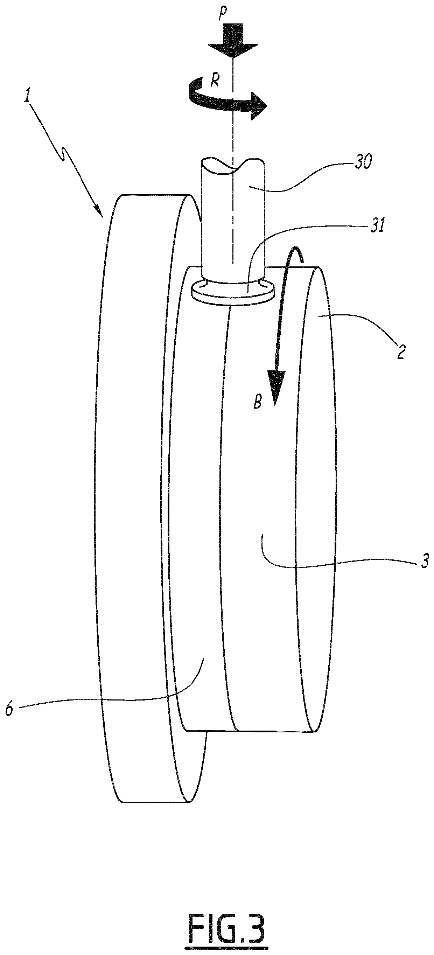

Figure 3 schematically illustrates a portion of a coating layer 3 which is under welding over the outer surface of the base disc 2 via friction stir build-up, according to which a stirring tool 30 is pressed in the direction of the arrow P, i.e. in a radial direction, and rotated around an axis X30, as shown by arrow R, while moving along the bonding direction B.

The stirring tool 30 is rotated, usually at high speed, and is pressed against base disc 2 causing friction so as to form the coating layer 3.

In particular, in one possible embodiment, the stirring tool 30 is formed, at least in the area devised to get into contact-friction with the base disc 2, by material suitable for directly forming the coating layer 3.

In this way, the heat caused by the friction between the tool shoulder 31 and the surface of the base disc 2 under working, results in a substantial local heating which plasticizes the material of the tool 30 itself at the contact area.

In case more friction is needed, the tool 30 can be provided with one or more pins beneath the shoulder 31.

The rotation R of the tool 30 around the axis X30, combined with its translation along the line of bonding B, allows transferring the softened material and realizing the bond also thanks to the pressure exercised along the direction P.

The rotation speed of the tool 30, the value of the pressure P and the speed of movement along the bonding line B can be suitably selected by operators according to the specific applications.

If the wheel 1 of a railway vehicle provided at step 102 is already a used wheel whose contact surface is worn and needs to be reshaped, the method 100 according to the present invention comprises the step 106 of removing, from the provided wheel 1, at least a portion of a pre-existing outer layer of worn material from around the base disc 2.

Such step 106 is carried out before the step 110 of realizing a metallurgical bond, as illustrated in figure 1.

Clearly, the step 106 can be carried out in parallel with or even before the step 104 of providing at least one coating layer comprising a second material.

The thickness of worn material to be removed can be selected according to the specific application and by means of tools, techniques and processes readily known to those skilled in the art and therefore not described herein in details.

After the worn layer is removed, it can be replaced with a new coating layer 3 of a certain thickness needed, which is metallurgically bonded around the outer surface of the base disc according to the step 110 described above.

Either when manufacturing a new wheel 1, or when refurbishing a used one, the method 100 can comprise, before the step 110 of realizing said metallurgical bond, a further intermediate step 108 of cleaning the outer surface of the base disc 2 of the wheel 1, in particular at the surface devoted for the application of the coating layer 3.

Such cleaning can comprise for example polishing the relevant surfaces.

Also in this case, the intermediate step 108 can be realized before the step 110 at a moment different from the sequence illustrated in figure 1.

According to an embodiment of the present disclosure, the step 104 of providing at least one coating layer 3 comprises providing one or more layers of wearable out, preferably non-powered, material.

According to yet another possible embodiment of the method 100, the step 104 of providing at least one coating layer 3 comprises providing at least one layer made of a second material which is different from that of the first material of the base disc 2.

A wheel 1 obtainable or in any case worked using a method 100 as above described, is partially shown in figure 2 mounted on an axle 10 which is part of a bogie of a railway vehicle, not illustrated.

As previously indicated, the wheel 1 comprises a base disc 2 featuring with respect to a rail 20, an internal transverse face 4, an external transverse face 5 and an outer surface 6 running transversally between the internal and external faces 4 and 5.

The whole diameter D of the base disc 2 has a length which can be sized according to the specific application and as dictated by applicable standards.

In figure 2, for the sake of simplicity, there is illustrated only half diameter D, as shown by reference D/2.

The base disc 2 comprises, e.g. is made of, a first material.

For example, as dictated by relevant European standard DIN EN13262 applicable to forged or rolled monobloc railway wheels that are made of vacuum degassed steel, the base disc 2 is made of steel, whose grade can be of type ER6, or type ER7, or type ER8, or type ER9.

When in operation, the coating layer 3, metallurgically bonded around the outer surface 6 of the base disc 2 and schematically represented in figure 1 by a hatched area, is at least in part in contact with the rail 20 of a railway line.

The contact parts of the coating layer 3 are therefore those which change irregularly with respect to the initial designed profile, due to the formation of worn zones caused in particular by friction with the rail 20.

In the wheel 1, the coating layer 3 comprises a second material which is different from the first material of the base disc 2.

In particular, according to an embodiment of the present invention, the coating layer 3 can comprise one or more layers of a material selected from the group consisting of Chrome molybdenum steel, full Austenite 18/8/6 Nickel 1.437, G105 MM 5.

Anyhow, the material oft he coating layer 3 can be selected according to the specific application and can be suitably selected in relation to the material of the base disc 2, as for example defined in relevant standards.

For instance, the table below indicates classes of materials usable for the coating layer 3 and classified according to the standard ISO/TR15608:2017:

| Group according ISO/TR15608:2017 | Subgroup according ISO/TR15608:2017 | Type of steel | extended |
|---|---|---|---|
| 6 | 6.2 | Chrome molybdenum steel | T Fe 1-500-p (EN 14700) and MF 1-GF-350 P (DIN 8555) |
| | | Named according EN ISO 3580-A: E Cr Mo 2 B 12 | |
| | | (EN 1599): E Cr Mo 2 B 12 | |
| | | AWS A 5.5: ∼E 9018-B 3 EN 10027-2, 1992: 1.7384 | |
| 8 | 8.3 | full Austenite 18/8 | By any full Austenite 18/8 |
| | | Named according | |
| | | EN 10027-2, 1992: 1.4370 | |
| | | EN ISO 14343-A: G 18 8 | |
| | | Mn | |
| | | EN 12072: G 18 8 Mn | |
| | | AWS A 5.9: ER 307 | |
| 9 | 9.1 | G105 MM 5 | T Fe 1-500-p (EN 14700) and MF 1-GF-350 P (DIN 8555) |
| | | Named according | |
| | | EN 14700: T Fe 3-350-st | |
| | | DIN 8555: MSG-3-MF-350 | |
| | | GP | |

The thickness and numbers of coating layers 3 can be suitably selected according to the specific applications, and in particular in the form of sheets or strips.

If the coating layer 3 is formed by a plurality of successive layers, each of them can be bonded over the previous one by repeating the step 110 previously described.

Hence, it is evident from the foregoing description that the method 100 according to the present invention allows achieving the intended aim and objects since it allows offering to the market railway wheels more resistant to wear and having therefore longer duration compared with wheels worked according to state of the art solutions.

This result is obtained not only when manufacturing new wheels but also when refurbishing used ones, thus extending the lifetime of existing wheel discs and positively impacting the overall costs of managing a fleet of railway vehicles.

The structure obtained with the coating layer 3 processed as previously described is similar to welded structures, i.e. structures intrinsically better than casted structures, as known to those skilled in the art, e.g. thanks to the absence of undesired pores and/or inclusions which can be present instead in such cast structures or even in structure obtained via less traditional processing, such as direct or selective laser melting, power bed led melting, and the like.

Thanks to the realization of a metallurgic bond via a solid-state welding phase using heat self-generated when realizing the metallurgical bond, and in particular to the use of a friction stir build-up welding technique, which is realized at lower process temperatures compared with other welding techniques, the material of the base disc is less influenced. Thus, further and additional heat treatments can be prevented or at least minimized.

Further, an excellent connection of the coating layer 3 to the base material of the disc 2 is obtained, with pore- and inclusion-free layers.

The method 100 thus conceived is susceptible of modifications and variations, all of which are within the scope of the inventive concept as defined in particular by the appended claims. For example, in relation to the specific application, as those skilled in the art would appreciate, the materials used can be others than the one exemplary listed above. Further, some of the steps can be executed according to a sequence different from the one above described and illustrated in figure 1 provided that the modified sequence allows obtaining the technical results for which the method 100 according to the present invention has been conceived.

## Claims

1. A method (100) for processing wheels (1) of railway vehicles, comprising the steps of:
- (102): providing a wheel (1) of a railway vehicle having at least a base disc (2) comprising a first material;
- (104): providing at least one coating material (3), said at least one coating material (3) being suitable to be positioned over at least part of an outer surface of said base disc (2) and to form a wearable out contact surface (4) for contacting a rail during operation of the railway vehicle; **characterized in that** it further comprises at least the following step:
- (110): realizing a metallurgical bond between said at least one coating material (3) and said at least part of the outer surface (6) of the base disc (2) via a solid-state welding phase using heat self-generated via friction when bonding the coating material onto the outer surface of the base disc;
wherein said step (110) of realizing a metallurgical bond comprises metal bonding said at least one coating material (3) to said base disc (2) by means of friction stir build-up welding
by pressing against said at least part of the outer surface (6) a stirring tool (30), said stirring tool (30) moving relative to the outer surface (6) along a bonding direction (B), and
wherein the stirring tool is made of coating material and a contact area of the stirring tool (30) with said at least part of the outer surface (6) is plasticized while moving along the bonding direction (B) and being pressed against said at least part of the outer surface (6), the plasticized contact area of the stirring tool (30) forming a coating layer (3) on said at least part of the outer surface (6).

2. A method (100) for processing wheels (1) of railway vehicles according to claim 1, wherein it comprises, before said step (110) of realizing a metallurgical bond, the step of:
- (106): removing from the provided wheel (1) a pre-existing layer of worn material from around said base disc (2).

3. A method (100) for processing wheels (1) of railway vehicles according to any of the preceding claims, wherein it comprises, before said step (110) of realizing a metallurgical bond, the step of:
- (108): cleaning the outer surface of the base disc of the wheel at least at the surface devoted for the application of the coating material.

4. A method (100) for processing wheels (1) of railway vehicles according to one or more of the previous claims, wherein said step (104) of providing at least one coating material (3) comprises providing at least one coating layer made of the coating material which is different from the first material of the base disc (2).

## Patentansprüche

1. Verfahren (100) zum Bearbeiten von Rädern (1) von Schienenfahrzeugen, umfassend die folgenden Schritte:
- (102): Bereitstellen eines Rades (1) eines Schienenfahrzeugs, das mindestens eine Basisscheibe (2) aufweist, umfassend ein erstes Material;
- (104): Bereitstellen mindestens eines Beschichtungsmaterials (3), wobei das mindestens eine Beschichtungsmaterial (3) geeignet ist, über mindestens einem Teil einer Außenfläche der Basisscheibe (2) positioniert zu werden und eine abnutzbare Kontaktfläche (4) für den Kontakt mit einer Schiene während eines Betriebs des Schienenfahrzeugs zu bilden; **dadurch gekennzeichnet, dass** es ferner mindestens den folgenden Schritt umfasst:
- (110): Ausführen einer metallurgischen Verbindung zwischen dem mindestens einen Beschichtungsmaterial (3) und dem mindestens einen Teil der Außenfläche (6) der Basisscheibe (2) über eine Festkörperschweißphase unter Verwendung von Wärme, die beim Verbinden des Beschichtungsmaterials mit der Außenfläche der Basisscheibe selbst durch Reibung erzeugt wird;
wobei der Schritt (110) eines Ausführens einer metallurgischen Verbindung ein Metallverbinden des mindestens einen Beschichtungsmaterials (3) mit der Basisscheibe (2) durch Reibrühr-Auftragsschweißen umfasst durch Pressen eines Rührwerkzeugs (30) gegen den mindestens einen Teil der Außenfläche (6), wobei sich das Rührwerkzeug (30) in Bezug auf die Außenfläche (6) entlang einer Verbindungsrichtung (B) bewegt, und
wobei das Rührwerkzeug aus Beschichtungsmaterial gefertigt ist und ein Kontaktbereich des Rührwerkzeugs (30) mit dem mindestens einen Teil der Außenfläche (6) plastifiziert wird, während es sich entlang der Verbindungsrichtung (B) bewegt und gegen den mindestens einen Teil der Außenfläche (6) gedrückt wird, wobei der plastifizierte Kontaktbereich des Rührwerkzeugs (30) eine Beschichtungsschicht (3) auf dem mindestens einen Teil der Außenfläche (6) bildet.

2. Verfahren (100) zum Bearbeiten von Rädern (1) von Schienenfahrzeugen nach Anspruch 1, wobei es vor dem Schritt (110) eines Ausführens einer metallurgischen Verbindung den folgenden Schritt umfasst:
- (106): Entfernen einer bereits vorhandenen Schicht aus abgenutztem Material um die Basisscheibe (2) von dem bereitgestellten Rad (1).

3. Verfahren (100) zum Bearbeiten von Rädern (1) von Schienenfahrzeugen nach einem der vorherigen Ansprüche, wobei es vor dem Schritt (110) eines Ausführens einer metallurgischen Verbindung den folgenden Schritt umfasst:
- (108): Reinigen der Außenfläche der Basisscheibe des Rades zumindest an der Oberfläche, die für den Auftrag des Beschichtungsmaterials vorgesehen ist.

4. Verfahren (100) zum Bearbeiten von Rädern (1) von Schienenfahrzeugen nach einem oder mehreren der vorherigen Ansprüche, wobei der Schritt (104) eines Bereitstellens mindestens eines Beschichtungsmaterials (3) ein Bereitstellen mindestens einer Beschichtungsschicht aus dem Beschichtungsmaterial umfasst, das sich von dem ersten Material der Basisscheibe (2) unterscheidet.

## Revendications

1. Procédé (100) de traitement de roues (1) de véhicules ferroviaires, comprenant les étapes consistant à :
- (102) : fournir une roue (1) d'un véhicule ferroviaire ayant au moins un disque de base (2) comprenant un premier matériau ;
- (104) : fournir au moins un matériau de revêtement (3), ledit matériau de revêtement (3) étant apte à être positionné sur au moins une partie d'une surface extérieure dudit disque de base (2) et à former une surface de contact d'usure (4) destinée à entrer en contact avec un rail pendant le fonctionnement du véhicule ferroviaire ; **caractérisé en ce qu'**il comprend en outre au moins l'étape suivante :
- (110) : réaliser une liaison métallurgique entre ledit matériau de revêtement (3) et ladite partie de la surface extérieure (6) du disque de base (2) via une phase de soudage à l'état solide en utilisant la chaleur autogénérée par friction lors de la liaison du matériau de revêtement à la surface extérieure du disque de base ;
dans lequel ladite étape (110) de réalisation d'une liaison métallurgique comprend la liaison métallique dudit matériau de revêtement (3) audit disque de base (2) au moyen d'un soudage par friction malaxage
en pressant contre ladite partie de la surface extérieure (6) un outil de malaxage (30), ledit outil de malaxage (30) se déplaçant par rapport à la surface extérieure (6) le long d'une direction de liaison (B), et
dans lequel l'outil de malaxage est fait d'un matériau de revêtement et une zone de contact de l'outil de malaxage (30) avec ladite partie de la surface extérieure (6) est plastifiée tout en se déplaçant le long de la direction de liaison (B) et en étant pressée contre ladite partie de la surface extérieure (6), la zone de contact plastifiée de l'outil de malaxage (30) formant une couche de revêtement (3) sur ladite partie de la surface extérieure (6).

2. Procédé (100) de traitement de roues (1) de véhicules ferroviaires selon la revendication 1, dans lequel il comprend, avant ladite étape (110) de réalisation d'une liaison métallurgique, l'étape consistant à :
- (106) : enlever de la roue fournie (1) une couche préexistante de matériau usé autour dudit disque de base (2).

3. Procédé (100) de traitement de roues (1) de véhicules ferroviaires selon l'une des revendications précédentes, dans lequel il comprend, avant ladite étape (110) de réalisation d'une liaison métallurgique, l'étape consistant à :
- (108) : nettoyer la surface extérieure du disque de base de la roue au moins au niveau de la surface consacrée à l'application du matériau de revêtement.

4. Procédé (100) de traitement de roues (1) de véhicules ferroviaires selon une ou plusieurs des revendications précédentes, dans lequel ladite étape (104) de fourniture d'au moins un matériau de revêtement (3) comprend la fourniture d'au moins une couche de revêtement faite du matériau de revêtement qui est différent du premier matériau du disque de base (2).
